Europäisches Patentamt

European Patent Office

Office européen des brevets

(19)

(11) Numéro de publication : **0 502 780 A1**

## (12) DEMANDE DE BREVET EUROPEEN

(21) Numéro de dépôt : **92400551.5**

(22) Date de dépôt : **03.03.92**

(51) Int. Cl.⁵ : **G01M 1/30**

(30) Priorité : **07.03.91 FR 9102754**

(43) Date de publication de la demande :
**09.09.92 Bulletin 92/37**

(84) Etats contractants désignés :
**CH DE GB IT LI**

(71) Demandeur : **FRAMATOME**
**Tour Fiat 1, Place de la Coupole**
**F-92400 Courbevoie (FR)**

(72) Inventeur : **Pugnet, Jean-Marc**
**12, Avenue Charles de Gaulle**
**F-71200 Le Creusot (FR)**

(74) Mandataire : **Habasque, Etienne Joel**
**Jean-François et al**
**Cabinet Lavoix 2, Place d'Estienne d'Orves**
**F-75441 Paris Cédex 09 (FR)**

(54) **Procédé d'équilibrage dynamique d'un rotor d'une machine tournante.**

(57)    Ce procédé d'équilibrage dynamique d'un rotor d'une machine tournante, du type comportant un arbre sur au moins une portée duquel est disposé au moins un organe fonctionnel, est caractérisé en ce qu'il comporte les étapes suivantes :

— on équilibre dynamiquement le rotor seul, pour déterminer un balourd résiduel de rotor $(\overrightarrow{OA})$,

— on caractérise l'excentricité de ladite au moins une portée de celui-ci en amplitude et en position angulaire par rapport à un repère déterminé, pour déterminer un balourd de montage de l'organe fonctionnel $(\overrightarrow{AD})$,

— on équilibre dynamiquement ledit au moins un organe avant montage sur l'arbre du rotor pour déterminer un balourd résiduel d'organe $(\overrightarrow{DE})$,

— on dispose angulairement l'organe sur la portée correspondante de l'arbre de manière que les balourds de rotor et d'organe se neutralisent au moins partiellement, et

— on complète l'équilibrage à l'aide de masses d'équilibrage définies à priori pour minimiser le balourd résultant.

FIG.2

EP 0 502 780 A1

La présente invention concerne un procédé d'équilibrage dynamique d'un rotor d'une machine tournante.

Plus particulièrement, l'invention se rapporte à un procédé d'équilibrage d'un rotor du type comportant un arbre sur au moins une portée duquel est disposé au moins un organe fonctionnel.

L'augmentation des puissances massiques et des vitesses de rotation des turbo-machines modernes rend les rotors de ceux-ci beaucoup plus sensibles aux phénomènes vibratoires.

Or, un bon comportement vibratoire c'est à dire de faible niveau d'amplitude, est souvent le garant du bon état de la machine.

Ces turbo-machines rapides ont des vitesses de fonctionnement situées au-delà d'au moins une vitesse critique de flexion.

Leurs rotors, et notamment ceux des compresseurs centrifuges, reçoivent des organes fonctionnels, comme des parties tournantes d'étanchéité de bout d'arbre, des collets de butée, des moyens d'accouplement, etc.., qui sont des sources potentielles de balourds pour l'ensemble du rotor, risquant de provoquer des vibrations synchrones, voire harmoniques de la vitesse de rotation.

Lors de sa fabrication en usine, le rotor est équilibré sur des machines spéciales, mais les opérations de maintenance des étanchéités de bout d'arbre, sur les sites de production, peuvent amener à remplacer celles-ci.

Ces étanchéités peuvent être constituées par des étanchéités mécaniques à huile ou des étanchéités sèches à gaz. Elles comportent des pièces tournantes à fixer sur le rotor et on ne dispose pas obligatoirement sur le lieu d'utilisation, de machine adéquate pour l'équilibrage de l'ensemble avant son redémarrage.

En effet, en usine, un rotor est équilibré dynamiquement en utilisant des machines spéciales qui peuvent être soit à basse vitesse, soit à haute vitesse.

A basse vitesse, ces machines sont faciles d'emploi, mais étant donné que la vitesse d'équilibrage reste inférieure à la première vitesse critique du rotor, on ne peut corriger que des balourds statiques. Aussi applique-t-on des procédures d'équilibrages successifs avec montage progressif des éléments du rotor de façon à minimiser les balourds dynamiques. Si un léger balourd dynamique persiste sur l'arbre, celui-ci ne pourra être corrigé que par un équilibrage in situ.

Les machines à haute vitesse sont beaucoup plus rares car elles nécessitent de mettre le rotor sous vide afin de limiter les puissances d'entraînement et les échauffements.

Ces machines permettent un équilibrage dynamique du rotor à la ou aux vitesses de fonctionnement grâce généralement à une méthode de coefficients d'influence.

On obtient alors un équilibrage optimisé pour le fonctionnement avec une correction des balourds statique et dynamique.

Tant que l'on travaille sur des machines d'équilibrage, on choisit un nombre de plans correcteurs, dans lesquels on place des masses d'équilibrage, suffisamment grand pour obtenir un bon compromis d'équilibrage.

Dès que le rotor est monté dans le stator de la turbo-machine, on doit procéder à un équilibrage in situ si besoin est, également par une méthode de coefficients d'influence.

On remarque que cet équilibrage ne permet pas de réaliser un aussi bon compromis vibratoire que le procédé décrit précédemment car on ne dispose généralement que d'un nombre très limité de plans correcteurs.

En effet, dans le cas de compresseurs centrifuges, on n'utilise parfois que le plan du ou des moyens d'accouplement, ce qui conduit à un résultat grossier pour corriger un balourd dû à une autre pièce de la machine.

Par ailleurs, chacun des organes fonctionnels rapportés sur les arbres de rotor est équilibré dynamiquement séparément avant son montage.

Cet arbre est lui-même finement équilibré et l'on constate néanmoins qu'il faut reprendre l'équilibrage de l'ensemble ainsi constitué.

Les différents procédés d'équilibrage mis en oeuvre dans l'état de la technique ne sont donc pas satisfaisants dans le cas de l'assemblage de pièces simplement équilibrées.

Par ailleurs, les opérations de maintenance de ces machines amènent, comme on l'a indiqué précédemment, à remplacer certains des organes fonctionnels montés sur les arbres de rotor et les organes fonctionnels de remplacement ne présentent pas obligatoirement les mêmes caractéristiques que les pièces à remplacer, de sorte que l'on est obligé de reprendre l'équilibrage de l'ensemble.

Cependant, cette reprise d'équilibrage est extrêmement difficile dans la mesure où l'on ne dispose plus de la même liberté d'intervention sur les différents éléments mentionnés précédemment.

En particulier, on ne dispose pas toujours in situ, des machines d'équilibrage indiquées précédemment.

Le but de l'invention est donc de résoudre les problèmes évoqués précédemment en proposant un procédé d'équilibrage dynamique d'un rotor qui soit simple et qui permette de conserver un équilibrage acceptable du rotor en cas de remplacement des organes fonctionnels montés sur des portées de l'arbre de celui-ci.

A cet effet, l'invention a pour objet un procédé d'équilibrage dynamique d'un rotor d'une machine tournante, du type comportant un ,arbre sur au moins une portée duquel est disposé au moins un organe fonctionnel, caractérisé en ce qu'il-comporte les étapes suivantes :

– on équilibre dynamiquement le rotor-seul, pour déterminer un balourd résiduel de rotor,

– on caractérise l'excentricité de ladite au moins une portée de celui-ci en amplitude et en position angulaire par rapport à un repère déterminé, pour déterminer un balourd de montage de l'organe fonctionnel,

– on équilibre dynamiquement ledit au moins un organe avant montage sur l'arbre du rotor, pour déterminer un balourd résiduel d'organe,

– on dispose angulairement l'organe sur la portée correspondante de l'arbre de manière que les balourds de rotor et d'organe se neutralisent au moins partiellement, et

– on complète l'équilibrage à l'aide de masses d'équilibrage définies à priori pour minimiser le balourd résultant.

L'invention sera mieux comprise à l'aide de la description qui va suivre, donnée uniquement à titre d'exemple et faite en se référant aux dessins annexés, sur lesquels :

– la Fig.1 représente un diagramme illustrant la caractérisation d'un balourd et d'une excentricité par retournement d'un organe à 180°, et

– la Fig.2 représente un diagramme illustrant la minimisation d'un balourd installé sur un rotor.

Le procédé d'équilibrage dynamique selon l'invention permet de réaliser un équilibrage dynamique d'un rotor d'une machine tournante, par exemple d'un compresseur centrifuge. Ce rotor comporte un arbre sur au moins une portée duquel est disposé au moins un organe fonctionnel, cet organe fonctionnel pouvant être constitué par la partie rotorique d'une étanchéité de bout d'arbre de cette machine.

Selon l'invention, le procédé d'équilibrage comprend les différentes opérations décrites ci-dessous.

Le rotor doit tout d'abord être équilibré dynamiquement seul, c'est à dire avant le montage des organes fonctionnels.

Cet équilibrage peut être réalisé en usine, lors de la fabrication du rotor, par les différents moyens ou machines décrits précédemment, et conduit à la connaissance d'un balourd résiduel du rotor.

On caractérise ensuite l'excentricité de chacune des portées de celui-ci en amplitude et en position angulaire par rapport à un repère prédéterminé, pour déterminer un balourd de montage de l'organe fonctionnel.

Cette caractérisation peut être réalisée en utilisant un procédé d'équilibrage dynamique avec retournement angulaire de 180° d'un outillage de masse connue, autour de l'arbre du rotor, ce procédé étant bien connu dans l'état de la technique, et n'étant pas décrit dans le détail.

Par ailleurs, les organes fonctionnels à monter sur le rotor, sont également équilibrés dynamiquement, pour déterminer leur balourd résiduel.

Cependant, cet équilibrage n'a pas besoin d'être aussi poussé que celui du rotor.

Cet équilibrage se fait avant montage de l'organe sur l'arbre.

Ces caractérisations de la portée de l'arbre permettent de constater qu'en fait, il existe pratiquement dans tous les cas, de petits défauts de concentricité entre les surfaces de l'arbre et son axe de rotation, ces défauts entraînant, compte tenu de la masse de l'organe fonctionnel à monter sur celui-ci, la création d'un balourd supérieur aux tolérances d'équilibrage (et correspondant aux balourds résiduels mentionnés précédemment).

La connaissance de ces défauts permet de neutraliser au moins partiellement les balourds de rotor et d'organe en disposant angulairement l'organe sur la portée correspondante de l'arbre, de manière que les balourds de ce rotor et de cet organe se neutralisent.

Bien entendu, cette neutralisation peut ne pas être compléte et on optimise alors à priori l'équilibrage de l'ensemble en utilisant par exemple des masses d'équilibrage de manière connue dans l'état de la technique.

On a décrit ci-après un exemple de mise en oeuvre de ce procédé d'équilibrage pour l'équilibrage d'un rotor consécutivement au montage de garnitures d'échantéité sur celui-ci.

On dispose donc d'un côté d'un rotor équilibré dynamiquement sans étanchéité et dont les portées sont bien caractérisées et d'un autre côté d'étanchéités équilibrées dynamiquement et dont les paliers sont bien caractérisés.

Dans cette hypothèse, la qualité d'équilibrage du rotor équipé de ces étanchéités, est liée à la capacité de compenser les balourds statiques engendrés par chaque étanchéité de bout d'arbre.

Chacun de ces balourds est engendré par le balourd propre de l'étanchéité et l'excentricité de la portée du fourreau de celle-ci par rapport à la soie correspondante du rotor.

La procédure d'équilibrage comprend donc les étapes suivantes :

a) le rotor équipé de ses roues est équilibré dynamiquement et on obtient alors un balourd résiduel de rotor caractérisé par un vecteur (amplitude et phase). Ce balourd est du type statique pour un équilibrage à faible vitesse de rotation.

b) on caractérisé les paliers des étanchéités.

Pour ceci, on dispose un manchon de masse connue M1, suivant le même principe que l'étanchéité, à jeu réduit, à l'emplacement de celle-ci sur l'arbre de rotor. Le balourd est relevé une première fois puis une seconde fois après rotation de 180° du manchon autour de l'axe du rotor.

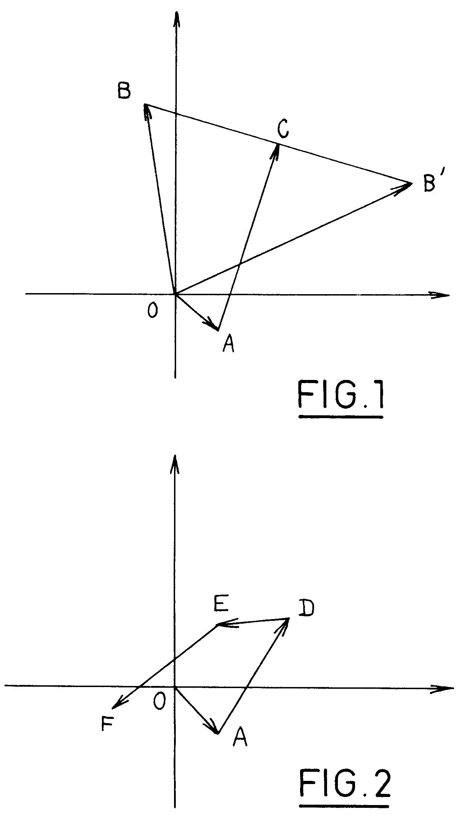

La composition des vecteurs de balourd est donnée schématiquement sur la Fig.1.

Sur cette figure :

$\overrightarrow{OA}$ représente le balourd résiduel du rotor,

– $\overrightarrow{OB}$ représente le balourd relevé avec le manchon,

– $\overrightarrow{OB}'$ représente le balourd relevé après rotation de 180° du manchon,
avec :

– $\overrightarrow{OB} = \overrightarrow{OA}$ (rotor) + $\overrightarrow{AC}$ (excentration de

la portée ) + $\overrightarrow{CB}$ (balourd propre au manchon),
et

– $\overrightarrow{OB}' = \overrightarrow{OA}$ (rotor) + $\overrightarrow{AC}$ (excentration

de la portée) - $\overrightarrow{CB}$ (balourd propre au manchon).

Le point C est obtenu au milieu de $\overrightarrow{BB}'$ et

$\overrightarrow{AC}$ caractérisé le produit masse du manchon par excentration de la portée ( amplitude et phase).

L'excentricité de la portée du rotor est donnée par la relation :

$$\overrightarrow{E} = \cfrac{\cfrac{\overrightarrow{OB} + \overrightarrow{OB}'}{2} - \overrightarrow{OA}}{M1}$$

Chaque étanchéité de masse connue est équilibrée dynamiquement en utilisant une technique de retournement à 180° autour de son axe de rotation pour caractériser son balourd propre en amplitude et position angulaire.

Cette technique de retournement permet d'obtenir deux balourds $\overrightarrow{OM}$ et $\overrightarrow{OM}'$ permettant de calculer le balourd résiduel de l'organe :

$$\overrightarrow{DE} = (\overrightarrow{OM} - \overrightarrow{OM}')/2.$$

On fait, dans ce cas, l'hypothèse que tous les balourds sont d'amplitude faible, afin que leur combinaison reste linéaire. Une autre hypothèse concerne la répétitivité du montage conduisant au même balourd installé.

Dans ces conditions, on peut réaliser la compensation dynamique du balourd statique dans chaque plan des étanchéités suivant la diagramme représenté sur la Fig.2.

Dans ce diagramme :

– $\overrightarrow{OA}$ : représente le balourd résiduel du rotor,

– $\overrightarrow{AD}$ : le balourd correspondant a l'excentration du palier d'étanchéité, c'est à dire l'excentration multipliée par la masse de la partie tournante,

– $\overrightarrow{DE}$ : le balourd propre à l'étanchéité, déjà orienté dans le sens de la diminution des effets,

– $\overrightarrow{EF}$ : la compensation obtenue par des vis d'équilibrage installées dans la garniture ou par enlèvement de vis en opposition, de manière connue en soi.

On conçoit ainsi que le procédé selon l'invention ne nécessite pas de disposer sur le site d'une machine d'équilibrage, lorsque l'on remplace les organes fonctionnels.

Le procédé d'équilibrage selon l'invention comporte donc cinq étapes.

Les trois premières étapes sont mises en oeuvre en usine, chez le constructeur, à l'aide de machines à équilibrer et doivent être effectuées une fois pour toutes pour caractériser le matériel.

Les deux dernières étapes sont réalisées au montage, à priori, en fonction des caractérisations obtenues dans les trois premières étapes, ou pendant une opération de maintenance et ne nécessitent pas de machine à équilibrer.

Ces deux dernières étapes peuvent être réalisées très facilement sur un site d'utilisation de la machine tournante, à l'occasion par exemple d'une opération de maintenance qui ne nécessite pas de machine à équilibrer.

Ce procédé prend en compte le balourd de montage $\overrightarrow{AD}$, caractérisé par l'excentricité de la portée de chaque organe fonctionnel par rapport à l'axe de rotation du rotor et accélère beaucoup la procédure d'équilibrage.

Le procédé selon l'invention est particulièrement intéressant pour des opérations de maintenance sur des étanchéités séches qui sont montées en cartouche et pour lesquelles on charge sur le rotor la partie tournante en créant un balourd potentiel qu'il y a lieu de corriger pour obtenir un bon fonctionnement du compresseur, c'est à dire exempt de vibration.

**Revendications**

1.  Procédé d'équilibrage dynamique d'un rotor d'une machine tournante, du type comportant un arbre sur au moins une portée duquel est disposé au moins un organe fonctionnel, caractérisé en ce qu'il comporte les étapes suivantes :
    – on équilibre dynamiquement le rotor seul, pour déterminer un balourd résiduel de rotor

    $$\overrightarrow{(OA)},$$

    – on caractérisé l'excentricité de ladite au moins une portée de celui-ci en amplitude et en position angulaire par rapport à un repère déterminé, pour déterminer un balourd de montage de l'organe fonctionnel $\overrightarrow{(AD)}$,
    – on équilibre dynamiquement ledit au moins un organe avant montage sur l'arbre du rotor pour déterminer un balourd résiduel d'organe

    $$\overrightarrow{(DE)},$$

    – on dispose angulairement l'organe sur la portée correspondante de l'arbre de manière que les balourds de rotor et d'organe se neutralisent au moins partiellement, et
    – on complète l'équilibrage à l'aide de masses d'équilibrage définies à priori pour minimiser le balourd résultant.

FIG.1

FIG.2

EP 0 502 780 A1

Office européen des brevets

**RAPPORT DE RECHERCHE EUROPEENNE**

Numero de la demande

EP 92 40 0551

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 003 127 (BRIGESTONE)<br>* revendications *<br>--- | | G01M1/30 |
| A | TECHNISCHE RUNDSCHAU<br>vol. 78, no. 22, 1 Mai 1986, BERN, CH<br>pages 70 - 77;<br>R. ALT: 'moderne auswuchttechnik,ein teil der production' | | |
| A | * page 75, colonne 1, alinéa 6 *<br><br>----- | | |

| | | | DOMAINES TECHNIQUES RECHERCHES (Int. Cl.5) |
|---|---|---|---|
| | | | G01M |

Le présent rapport a été établi pour toutes les revendications

| Lieu de la recherche | Date d'achèvement de la recherche | Examinateur |
|---|---|---|
| LA HAYE | 06 MAI 1992 | ZAFIROPOULOS N. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

7